# EUROPÄISCHE PATENTSCHRIFT

(11) **EP 1 669 614 B1**
(45) Veröffentlichungstag und Bekanntmachung des Hinweises auf die Patenterteilung: **13.02.2008**
(21) Anmeldenummer: 05027010.7
(22) Anmeldetag: 09.12.2005
(51) Int. Cl.: F16B 5/02

(54) **Schraubverbindung mit Toleranzausgleich**
Threaded connection with tolerance compensation
Liaison par vissage à compensation des tolérances

(30) Priorität: 10.12.2004 DE 202004019153 U
(43) Veröffentlichungstag der Anmeldung: 14.06.2006
(73) Patentinhaber: Böllhoff Verbindungstechnik GmbH, 33649 Bielefeld (DE)
(72) Erfinder: Dembowsky, Hans-Joachim, 21035 Hamburg (DE); Jodeleit, Martin, 33617 Bielefeld (DE); Figge, Hans-Ulrich, 33758 Schloss Holte-Stukenbrock (DE)
(74) Vertreter: Hauck Patent- und Rechtsanwälte

(56) Entgegenhaltungen:
- DE-A1- 10 147 141
- DE-U1- 20 204 994
- US-A- 6 062 263

## Beschreibung

Die vorliegende Erfindung betrifft eine Schraubverbindung zwischen einem ersten Bauteil und einem zweiten Bauteil mit der Möglichkeit eines Ausgleichs von Toleranzen im Abstand zwischen den beiden Bauteilen.

Aus DE 101 47 141 A1 ist eine abgedichtete, verstellbare und selbsthemmende Schraubverbindung aus einer Mutter und einer Schraube nach dem Oberbegriff des Anspruchs 1 bekannt. Bei dieser Schraubverbindung hat die Mutter, die z.B. als Blindnietmutter ausgebildet ist und an dem ersten Bauteil festgelegt wird, eine Bohrung mit einem Gewindeabschnitt und einem glatten zylindrischen Bohrungsabschnitt. Die Schraube, die über ein Kupplungsteil mit dem zweiten Bauteil lösbar verbunden werden kann, ist an einem Zwischenabschnitt mit mehreren umlaufenden Dichtungsrippen versehen. Die Dichtungsrippen sind bezüglich des zylindrischen glatten Bohrungsabschnittes der Mutter so dimensioniert, dass sie bei Verstellbewegungen der Schraube relativ zu der Mutter gleitend gegen den glatten Bohrungsabschnitt der Bohrung angedrückt werden. Hierdurch entsteht eine Schraubverbindung, die trotz ihrer Verstellbarkeit fluiddicht und selbsthemmend ist.

Eine Anwendungsmöglichkeit einer derartigen Schraubverbindung ist beispielsweise die Befestigung einer Fahrzeug-Rückleuchte an einem Karosserieblech. Zwischen der Fahrzeug-Rückleuchte und anderen Karosserieteilen ist üblicherweise ein Spalt vorhanden, der insbesondere aus ästhetischen Gründen möglichst klein gehalten werden soll. Durch die Verstellbarkeit der Schraubverbindung lässt sich der Abstand zwischen den beiden Bauteilen verändern, wodurch der betreffende Spalt minimiert werden kann.

DE-U-202 04 994 offenbart eine Toleranzausgleichsanordnung zum Ausgleichen von Toleranzen im Abstand zwischen zwei fest vormontierten Bauteilen. Die Toleranzausgleichsanordnung weist einen Ausgleichsbolzen, der mit einem Flansch versehen ist, sowie eine Feststellmutter auf. Wenn sich der Ausgleichsbolzen nach einer Toleranzausgleichsbewegung mit seinem Flansch an eines der beiden vormontierten Bauteile anlegt, kann er durch die Feststellmutter an dem entsprechenden Bauteil festgespannt werden.

US-A-6 062 263 offenbart einen Schraubstopfen zum Verschließen von Fluide enthaltenden Rohren, welche zusätzlich zu ihrem Außengewinde mit mehreren Dichtringen zum Abdichten des Schraubstopfens im Rohr versehen sind. Die Dichtringe können an dem einen oder anderen Ende des Schraubstopfens vorgesehen sein.

Durch die vorliegende Erfindung wird die Schraubverbindung gemäß DE 101 47 141 A1 weiterentwickelt. Insbesondere soll die Schraubverbindung so ausgestaltet werden, dass das zweite Bauteil fest mit der Mutter und somit fest mit dem ersten Bauteil verbunden werden kann

Die Schraubverbindung gemäß der Erfindung ist in Anspruch 1 definiert.

Bei der erfindungsgemäß ausgebildeten Schraubverbindung ist vorgesehen, dass der Verbindungsteil der Schraube einen Flansch zur Anlage an dem zweiten Bauteil und ein zweites Gewinde zum Verschrauben mit einer Kontermutter aufweist, so dass das zweite Bauteil bei Anlage am Flansch der Schraube durch die Schraube in seiner Lage feineinstellbar ist und zur Fixierung in der feineingestellten Lage durch die Kontermutter am Flansch der Schraube festspannbar ist.

Diese Ausgestaltung der Schraube bietet die Möglichkeit, das zweite Bauteil nach einer Feineinstellung in seiner Lage relativ zu dem ersten Bauteil fest mit der Mutter zu verschrauben und dadurch fest mit dem ersten Bauteil zu verbinden. Ist das zweite Bauteil beispielsweise eine an einer Fahrzeug-Rückleuchte vorgesehene Haltelasche, so lässt sich durch die Verstellbarkeit der Schraubverbindung der Abstand zu dem ersten Bauteil (Karosserieblech) verändern, um entsprechende Fertigungs- und Montagetoleranzen zwischen diesen Bauteilen ausgleichen zu können.

Erfindungsgemäß ist der Dichtungsabschnitt der Schraube nicht als Zwischenabschnitt ausgebildet, sondern an einem axialen Ende der Schraube angeordnet. Der Dichtungsabschnitt der Schraube kann daher auch ohne weiteres mit mehr als drei Dichtungsrippen versehen werden, um die Selbsthemmungs- und Dichtungswirkung der Schraubverbindung zu verbessern.

Weitere vorteilhafte Ausgestaltungen und Weiterbildungen der Erfindung sind in den Unteransprüchen enthalten.

Anhand der Zeichnungen wird ein bevorzugtes Ausführungsbeispiel der Erfindung näher erläutert. Es zeigt:
Figur 1 eine perspektivisch ausgebildete Schraubverbindung ohne zu verbindende Bauteile;
Figuren 2 und 3 Längsschnitte durch die Schraubverbindung der Fig. 1 mit zu verbindenden Bauteilen in unterschiedlichen Betriebszuständen;
Figur 4 einen Längsschnitt durch die Kontermutter der Schraubverbindung;
Figur 5 einen Längsschnitt durch die Schraube der Schraubverbindung;
Figur 6 einen Längsschnitt durch die Mutter der Schraubverbindung.

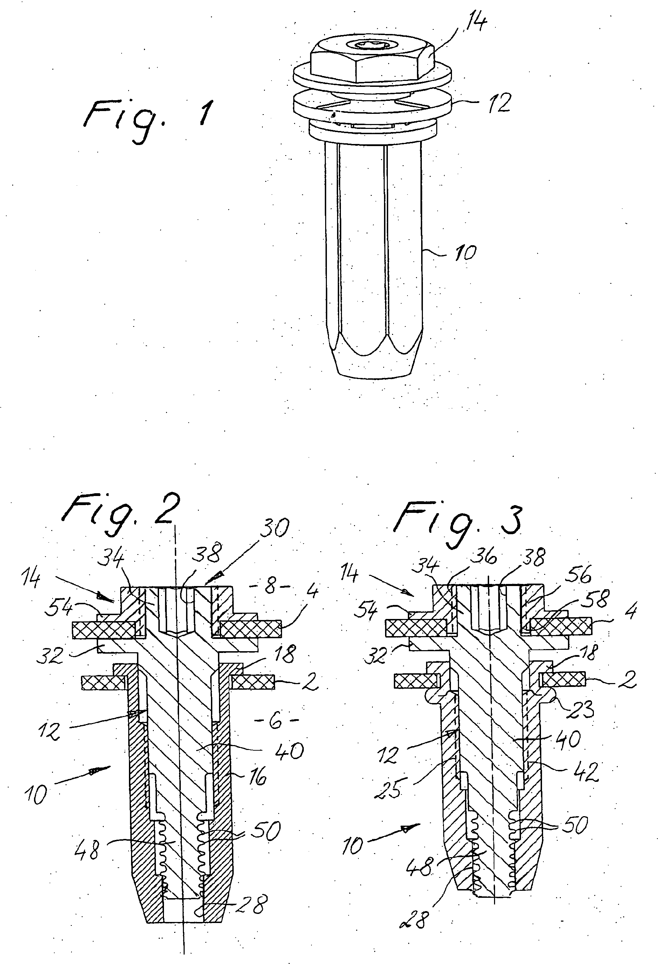

Die in den Fig. 1 bis 3 dargestellte Schraubverbindung dient zum Verbinden eines Bauteils 2 und eines Bauteils 4, die zumindest im Bereich der Schraubverbindung plattenförmig ausgebildet sind. Das Bauteil 2 ist beispielsweise ein Karosserieblech eines Fahrzeuges (nicht gezeigt), und das Bauteil 4 ist beispielsweise eine aus Kunststoff bestehende Haltelasche, die an einer Rückleuchte (nicht gezeigt) des Fahrzeuges angespritzt ist. Wie bereits eingangs erläutert, ist zwischen der Rückleuchte und anderen Fahrzeugteilen üblicherweise ein Spalt (nicht gezeigt) vorhanden, der durch die Verstellbarkeit der Schraubverbindung minimiert werden soll, wie noch genauer erläutert wird. Das Bauteil 2 (Karosserieblech) trennt einen Innenraum 6 von einem Außenbereich 8, wie in Fig. 2 schematisch angedeutet ist. Die Schraubverbindung ist nur vom Außenbereich 8 her zugänglich.

Die Schraubverbindung besteht aus einer Mutter 10, einer Schraube 12 und einer Kontermutter 14.

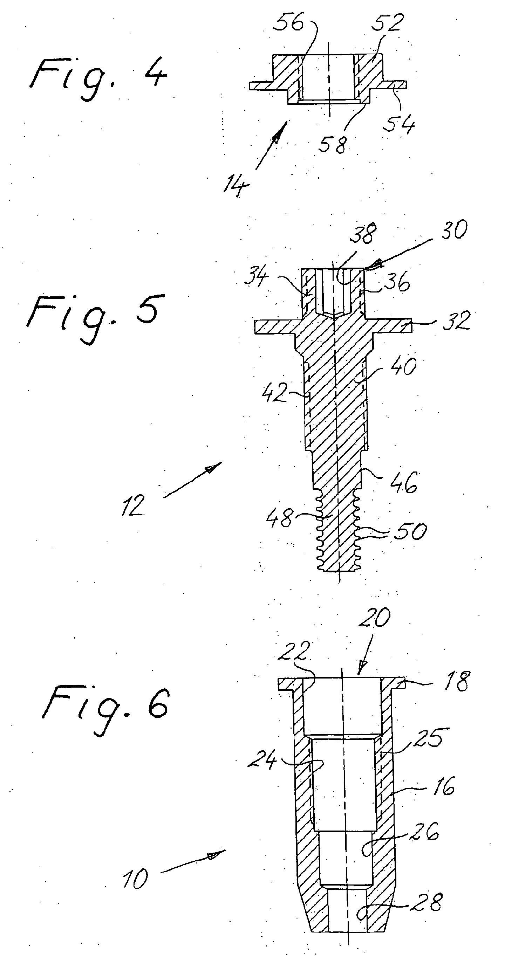

Die Mutter 10 ist als Blindnietmutter ausgebildet. Wie insbesondere aus Fig. 6 hervorgeht, besteht die Mutter 10 aus einem hülsenförmigen Körper 16, an dessen einem axialen Ende ein Ringbund 18 angeformt ist. Der Hülsenkörper 16 ist mit einer durchgehenden, an beiden Enden offenen Bohrung 20 versehen, die sich im unverformten Zustand aus einem glattwandigen Bohrungsabschnitt 22, einem Gewindeabschnitt 24 mit einem Gewinde 25, einem glattwandigen Bohrungsabschnitt 26 und einem glattwandigen Bohrungsabschnitt 28 zusammensetzt. Die Durchmesser der Bohrungsabschnitte werden ausgehend vom Bohrungsabschnitt 22 über die Bohrungsabschnitte 24 und 26 zum Bohrungsabschnitt 28 hin abnehmend kleiner. Die Mutter 10 ist an ihrem Außenumfang als Mehrkant, beispielsweise Sechskant, zum Ansetzen eines Werkzeuges ausgebildet (Fig. 1).

Die in Fig. 5 als Einzelteil dargestellte Schraube 12 weist an einem axialen Ende einen Verbindungsteil 30 auf, der aus einem ringförmigen Flansch 32 und einem Kopfabschnitt 34 besteht. Der Kopfabschnitt 34 weist ein Gewinde 36 und eine Antriebsformation 38 in Form beispielsweise eines Innensechsrundes zum Ansetzen eines Werkzeuges auf. Auf der von dem Kopfabschnitt 34 abgewandten Seite des Flansches 32 hat der Schaft einen Gewindeabschnitt 40 mit einem Gewinde 42, das passend zu dem Gewinde 25 der Mutter 10 ausgebildet ist.

Der Gewindeabschnitt 40 der Schraube 12 ist über einen glattwandigen Schaftabschnitt 46 mit einem Dichtungsabschnitt 48 verbunden, der an dem vom Kopfabschnitt 34 abgewandten axialen Ende der Schraube 12 vorgesehen ist. Der Dichtungsabschnitt 48 ist mit einer größeren Anzahl von umlaufenden Dichtungsrippen 50 versehen. Im dargestellten Ausführungsbeispiel sind acht Dichtungsrippen 50 vorgesehen, wobei jedoch je nach Anwendungszweck mehr oder weniger Dichtungsrippen möglich sind. Die Dichtungsrippen 50 wirken mit dem glattwandigen Bohrungsabschnitt 28 der Mutter 20 zur Abdichtung der Schraubverbindung zusammen, wie noch genauer erläutert wird.

Die in Fig. 4 dargestellte Kontermutter 14 besteht aus einem Mutternkörper 52, an dem ein Ringflansch 54 angeformt ist. Der Mutternkörper 52 ist mit einem Muttergewinde 56 versehen, das passend zu dem Gewinde 36 des Kopfabschnittes 34 der Schraube 12 ausgebildet ist. An der Unterseite des Flansches 54 ist ein ringförmiger Vorsprung 58 angeformt. Der Mutternkörper 52 der Kontermutter 14 ist am Außenumfang als Mehrkant, beispielsweise Sechskant, zum Ansetzen eines Werkzeuges ausgebildet (Fig. 1).

Die Schraube 12 besteht zweckmäßigerweise aus einem schlagzähen Kunststoff wie z.B. Polyamid mit einer Faserverstärkung, insbesondere einer Glasfaserverstärkung. Die als Blindnietmutter ausgebildete Mutter 10 besteht zweckmäßigerweise aus Metall oder einem harten Kunststoff. Die Kontermutter 14 besteht zweckmäßigerweise ebenfalls aus einem Kunststoff, der mit dem Kunststoff der Schraube 12 identisch sein kann.

Im Folgenden werden die Montage und Funktionsweise der Schraubverbindung beschrieben.

Zunächst wird die als Blindmutter ausgebildete Mutter 10 von oben in ein entsprechendes Loch des Bauteils 2 eingesteckt, das zur Drehsicherung der Mutter 10 an den unrunden Umfang (Mehrkant-Umfang) der Mutter 10 angepasst sein kann (Fig. 1, 2). Die Mutter 10 wird dann mit einem herkömmlichen Setzwerkzeug (nicht gezeigt) am Bauteil 2 gesetzt. D. h., es wird durch Einspindeln einer Montagespindel (nicht gezeigt) in den Gewindeabschnitt 24 der Mutternbohrung 20 ein Wulst 23 gefaltet, der zusammen mit dem Ringbund 18 die Blindnietmutter am Bauteil 2 festlegt (Fig. 3).

Die Schraube 12 wird nun in die Bohrung 20 der Mutter 10 von oben eingesteckt, und das Gewinde 42 der Schraube 12 wird dann mittels eines an der Antriebsformation 38 angreifenden Werkzeuges mit dem Gewinde 25 der Mutter 10 verschraubt. Hierbei treten die Dichtungsrippen 50 in den glattwandigen zylindrischen Bohrungsabschnitt 28 der Mutter 10 ein. Die Dichtungsrippen 50 sind gegenüber dem Durchmesser des glattwandigen Bohrungsabschnittes 28 so überdimensioniert, dass sie mit einer bestimmten Anpresskraft gegen die Wandung des Bohrungsabschnittes 28 angedrückt und geringfügig verformt (umgebogen) werden. Das Übermaß der Dichtungsrippen 30 wird so gewählt, dass trotz der unvermeidlichen Fertigungstoleranzen eine ausreichende Anpresskraft erzeugt wird, um einerseits für eine einwandfreie Abdichtung der Schraubverbindung und andererseits für eine Art Selbsthemmung zwischen der Schraube und der Mutter zu sorgen.

Durch Einschrauben der Schraube 12 in die Mutter 10 wird die Schraube 12 in eine voreingestellte axiale Lage relativ zu dem Bauteil 2 (Karosserieblech) gebracht. Das Bauteil 4 (Haltelasche der Rückleuchte) kann nun über den Kopfabschnitt 34 der Schraube 12 bewegt und in Anlage mit dem Flansch 32 der Schraube 12 gebracht werden. Das Bauteil 4 ist zunächst axial beweglich gelagert. Durch Verstellen der Schraube 12 kann daher das am Flansch 32 anliegende Bauteil 4 in eine feineingestellte Lage gebracht werden, in der ein zwischen der Rückleuchte und anderen Karosserieteilen vorhandener Spalt (nicht gezeigt) zu einem Minimum wird.

Wenn das Bauteil 4 in seiner axialen Lage feineingestellt ist, wird die Kontermutter 14 über ihr Gewinde 56 mit dem Gewinde 36 der Schraube 12 verschraubt, wodurch das Bauteil 4 zwischen dem Flansch 54 der Kontermutter 14 und dem Flansch 32 der Schraube 12 eingespannt wird. Der am Flansch 54 der Kontermutter 14 angeformte axiale ringförmige Vorsprung 58 greift hierbei in das Loch des Bauteils 4. Das Bauteil 4 ist nun in seiner feineingestellten axialen Lage fest mit der Mutter 10 und über die Mutter 10 fest mit dem Bauteil 2 verbunden. Fertigungs- und Montagetoleranzen zwischen dem Bauteil 4 (Haltelasche der Rückleuchte) und den anderen Karosserieteilen (nicht gezeigt) sind aufgrund der Feineinstellung der Schraube 12 ausgeglichen.

## Patentansprüche

1. Schraubverbindung zwischen einem ersten Bauteil (2) und einem zweiten Bauteil (4) mit:
einer Mutter (10), die in einem Loch des ersten Bauteils (2) festlegbar ist und eine Bohrung (20) mit einem Gewindeabschnitt (24) und einem glatten Bohrungsabschnitt (28) aufweist, und
einer Schraube (12) mit einem ersten Gewinde (42), das in den Gewindeabschnitt (24) der Mutterbohrung (20) einschraubbar ist, einem Verbindungsteil (30), der mit dem zweiten Bauteil (4) verbindbar ist, um das zweite Bauteil (4) durch die Schraube (12) in seiner Lage fein einstellen zu können, und einem Dichtungsabschnitt (48), der mit mindestens einer umlaufenden Dichtungsrippe (50) versehen ist, die bezüglich des glatten Bohrungsabschnittes (28) der Mutter (10) so dimensioniert ist, dass die Dichtungsrippe (50) bei Verstellbewegungen der Schraube (12) relativ zur Mutter (10) abgedichtet und selbsthemmend an dem glatten Bohrungsabschnitt (28) anliegt,
**dadurch gekennzeichnet,**
**dass** der Verbindungsteil (30) der Schraube (12) einen Flansch (32) zur Anlage an dem zweiten Bauteil (4) und ein zweites Gewinde (36) zum Verschrauben mit einer Kontermutter (14) aufweist, so dass das zweite Bauteil (4) bei Anlage am Flansch (32) der Schraube (12) durch die Schraube in seiner Lage feineinstellbar ist und zur Fixierung in der feineingestellten Lage durch die Kontermutter (14) am Flansch (32) der Schraube (12) festspannbar ist, wobei das zweite Gewinde (36) an einem axialen Ende der Schraube (30) angeordnet ist, das erste Gewinde (42) der Schraube (12) zwischen dem Dichtungsabschnitt (48) und dem Flansch (32) angeordnet ist, und der Dichtungsabschnitt (48) an dem anderen axialen Ende der Schraube (12) angeordnet ist.

2. Schraubverbindung nach Anspruch 1, **dadurch gekennzeichnet, dass** der Dichtungsabschnitt (48) der Schraube (12) mehr als drei Dichtungsrippen (50) hat.

3. Schraubverbindung nach Anspruch 1 oder 2, **dadurch gekennzeichnet, dass** die Schraube (12) an ihrem axialen Ende, an dem das zweite Gewinde (36) vorgesehen ist, eine Antriebsformation (38) aufweist.

4. Schraubverbindung nach einem der vorhergehenden Ansprüche, **dadurch gekennzeichnet, dass** die Mutter (10) als Blindnietmutter ausgebildet ist.

5. Schraubverbindung nach einem der vorhergehenden Ansprüche, **dadurch gekennzeichnet, dass** die Mutter (10) einen Ringbund (18) zur Anlage an dem ersten Bauteil (2) hat und der glatte Bohrungsabschnitt (28) der Mutter (10) an dem vom Ringbund (18) entfernten axialen Ende der Mutter (10) vorgesehen ist.

6. Schraubverbindung nach einem der vorhergehenden Ansprüche, **dadurch gekennzeichnet, dass** das zweite Bauteil (4) eine Haltelasche einer Fahrzeug-Rückleuchte ist und die Schraubverbindung so angeordnet ist, dass durch ihre Verstellbarkeit ein zwischen der Fahrzeug-Rückleuchte und anderen Fahrzeugteilen vorhandener Spalt minimierbar ist.

## Claims

1. A threaded connection between a first component (2) and a second component (4) with:
a nut (10), which can be fixed in a hole of the first component (2) and has a bore (20) with a threaded section (24) and a smooth bore section (28), and
a bolt (12) with a first thread (42), which can be screwed into the threaded section (24) of the nut bore (20), a connection part (30), which can be connected with the second component (4), to be able to finely adjust, using the bolt (12), the second component (4) in its position, and a sealing section (48), which is provided with at least one circumferential sealing rib (50), which, relative to the smooth bore section (28) of the nut (10), is dimensioned such that the sealing rib (50), during adjustment movements of the bolt (12) relative to the nut (10), lies against the smooth bore section (28), sealing and self-locking it,
**characterized in that**,
the connecting part (30) of the bolt (12) has a flange (32) for contact with the second component (4), and a second thread (36) for the screwing-in counter nut (14), such that the second component (4) while in contact with the flange (32) of the bolt (12) can be finely adjusted in its position using the bolt and, for fixing in the finely adjusted position, can be clamped by the counter nut (14) to the flange (32) of the bolt (12), wherein the second thread (36) is arranged on one axial end of the bolt (30), the first thread (42) of the bolt (12) is arranged between the sealing section (48) and the flange (32), and the sealing section (48) is arranged on the other axial end of the bolt (12).

2. The threaded connection according to claim 1, **characterized in that** the sealing section (48) of the bolt (12) has more than three sealing ribs (50).

3. The threaded connection according to claim 1 or 2, **characterized in that** the bolt (12) has a drive formation (38) on its axial end, on which the second thread (36) is provided.

4. The threaded connection according to one of the preceding claims, **characterized in that** the nut (10) is formed as a blind rivet nut.

5. The threaded connection according to one of the preceding claims, **characterized in that** the nut (10) has a ring collar (18) for contact with the first component (2), and the smooth bore section (28) of the nut (10) is provided on the axial end, distant from the ring collar (18), of the nut (10).

6. The threaded connection according to one of the preceding claims, **characterized in that** the second component (4) is a retaining plate of a vehicle rear light, and the threaded connection is arranged such that through its adjustability a gap, present between the vehicle rear light and other vehicle parts, can be minimized.

## Revendications

1. Liaison par vissage entre un premier composant (2) et un second composant (4) comprenant :
un écrou (10) qui peut être fixé dans un trou du premier composant (2) et présente un alésage (20) avec une section filetée (24) et une section d'alésage lisse (28), et
une vis (12) avec un premier filet (42) qui peut être vissé dans la section fileté (24) de l'alésage (20) de l'écrou, une partie de liaison (30), qui peut être assemblée au deuxième composant (4) pour pouvoir régler avec précision le deuxième composant (4) dans sa position grâce à la vis (12), et une section d'étanchéité (48) qui est pourvue d'au moins une nervure d'étanchéité (50) qui est dimensionnée par rapport à la section d'alésage lisse (28) de l'écrou (10) de telle façon que la nervure d'étanchéité (50) lors de mouvements d'ajustement de la vis (12) par rapport à l'écrou (10) appuie sur la section d'alésage lisse (28) de manière étanche et autobloquante,
**caractérisée en ce que**
la partie de liaison (30) de la vis (12) présente une bride (32) pour l'appui sur le deuxième composant (4) et un deuxième filet (36) pour le vissage avec un contre-écrou (14), de sorte que le second composant (4) est réglable avec précision par la vis dans sa position lors de l'appui sur la bride (32) de la vis (12) et peut être serré pour la fixation dans la position réglée avec précision par le contre-écrou (14) contre la bride (32) de la vis (12), le second filet (36) étant disposé à une extrémité axiale de la vis (30), le premier filet (42) de la vis (12) étant disposé entre la section d'étanchéité (48) et la bride (32), et la section d'étanchéité (48) étant disposé à l'autre extrémité axiale de la vis (12).

2. Liaison par vissage selon la revendication 1, **caractérisé en ce que** la section d'étanchéité (48) de la vis (12) a plus de trois nervures d'étanchéité (50).

3. Liaison par vissage selon la revendication 1 ou 2, **caractérisée en ce que** la vis (12) présente une formation d'entraînement (38) à son extrémité axiale à laquelle le deuxième filet (36) est prévu.

4. Liaison par vissage selon l'une quelconque des revendications précédentes, **caractérisée en ce que** l'écrou (10) est constitué en tant qu'écrou-rivet aveugle.

5. Liaison par vissage selon l'une quelconque des revendications précédentes, **caractérisée en ce que** l'écrou (10) a un collet annulaire (18) pour l'appui sur un premier élément de construction (2) et la section d'alésage lisse (28) de l'écrou (10) est prévue à l'extrémité axiale de l'écrou (10) éloignée du collet annulaire (18).

6. Liaison par vissage selon l'une quelconque des revendications précédentes, **caractérisée en ce que** le second élément de construction (4) est une languette de retenue d'un feu arrière d'un véhicule et la liaison par vissage est disposée de façon à ce que, par sa capacité d'ajustement, un interstice présent entre le feu arrière du véhicule et d'autres pièces du véhicule puisse être minimisé.
